# EUROPÄISCHE PATENTSCHRIFT

(11) **EP 2 917 555 B1**
(45) Veröffentlichungstag und Bekanntmachung des Hinweises auf die Patenterteilung: **27.03.2019**
(21) Anmeldenummer: 13779861.7
(22) Anmeldetag: 22.10.2013
(51) Int. Cl.: F02M 51/00, F02M 53/02, F02M 53/06, F02M 69/46, F02M 63/02, F02M 31/125

(54) **VORHEIZEINRICHTUNG FÜR EINE KRAFTSTOFFEINSPRITZANLAGE**
PRE-HEATING DEVICE FOR A FUEL INJECTION SYSTEM
DISPOSITIF DE PRÉCHAUFFAGE DESTINÉ À UN SYSTÈME D'INJECTION DE CARBURANT

(30) Priorität: 09.11.2012 DE 102012220429
(43) Veröffentlichungstag der Anmeldung: 16.09.2015
(73) Patentinhaber: Mahle International GmbH, 70376 Stuttgart (DE)
(72) Erfinder: AMARAL, Tadeu, 02611-003 Sao Paulo - SP (BR); CRUZ, Roberta, 12052-260 Taubaté - SP (BR); YOSHINO, Fernando, 13214-730 Jundial-SP (BR); MOREIRA, Fabio, 12380-000 Vinhedo - SP (BR); STEHLIG, Juergen, 72654 Neckartenzlingen (DE); KLINGBACHER, Patrik, A-9400 Wolfsberg (AT); SCHADLER, Werner, A-8430 Seggauberg (AT); WETZL, Mario, A-9125 Kühnsdorf (AT)
(74) Vertreter: BRP Renaud & Partner mbB Rechtsanwälte Patentanwälte Steuerberater
(86) Internationale Anmeldenummer: PCT/EP2013/072076
(87) Internationale Veröffentlichungsnummer: WO 2014/072171

(56) Entgegenhaltungen:
- EP-A2- 0 198 414
- WO-A1-97/37121
- GB-A- 2 454 022
- JP-A- 2010 101 294
- US-A- 5 401 935
- US-A1- 2009 294 552

## Beschreibung

Die vorliegende Erfindung betrifft eine Vorheizeinrichtung für eine Kraftstoffeinspritzanlage einer Brennkraftmaschine, die insbesondere in einem Kraftfahrzeug angeordnet ist, gemäß dem Oberbegriff des Anspruchs 1. Die Erfindung betrifft außerdem eine Kraftstoffeinspritzanlage für eine Brennkraftmaschine, die mit wenigstens einer derartigen Vorheizeinrichtung ausgestattet ist.

Bei Brennkraftmaschinen, die mit einem Kraftstoff betrieben werden sollen, der bei niedrigen Temperaturen eine hohe Viskosität besitzt, besteht das Problem, dass mit Hilfe derartiger Kraftstoffe für den Start der Brennkraftmaschine, also für das Anlassen der Brennkraftmaschine bei diesen niedrigen Temperaturen kein zündfähiges Gemisch in den Brennräumen der Brennkraftmaschine erzeugt werden kann. Bei so genannten "Bio-Kraftstoffen", insbesondere Bio-Diesel, tritt dieses Problem bereits bei Temperaturen unterhalb +14°C auf. Andere Bio-Kraftstoffe, wie zum Beispiel Ethanol und Methanol, charakterisieren sich durch einen Flammpunkt von etwa 12°C, der sehr hoch ist im Vergleich zum Flammpunkt von herkömmlichem Benzin, der etwa bei -42°C liegt. Folglich haben derartige Bio-Kraftstoffe eine niedrige Flüchtigkeit im Vergleich zu Benzin und benötigen eine hohe Verdampfungswärme im Vergleich zu Benzin. Diese Eigenschaften führen bei derartigen Bio-Kraftstoffen, wie Ethanol und Methanol, zu kritischen Situationen für den Start einer Brennkraftmaschine unter kalten Umgebungsbedingungen, da derartige Bio-Kraftstoffe eine große Menge an Wärme benötigen, um einen Einspritzstrahl zu erzeugen, der sich für eine Zündung und zum Starten der Brennkraftmaschine eignet.

Dieser Problematik kann mit zwei grundsätzlich unterschiedlichen Lösungsansätzen begegnet werden. In einem ersten Lösungsansatz kann zum Betreiben der Brennkraftmaschine ein zweites Kraftstoffsystem bereitgestellt werden, das es ermöglicht, die Brennkraftmaschine für ihren Start mit einem anderen, auch bei niedrigeren Temperaturen leicht entzündlichen Kraftstoff zu betreiben, um sie so anzulassen. Eine derartige Lösung ist jedoch sehr aufwändig und dementsprechend teuer. Des Weiteren ergibt sich hierbei das Problem, dass der Fahrzeugführer zwei unterschiedliche Kraftstofftanks bzw. deren Füllstände überwachen muss und diese beim Betanken auch nicht verwechseln darf.

Ein zweiter Lösungsansatz beruht auf dem allgemeinen Gedanken, den schwer entzündlichen Kraftstoff für den Startvorgang der Brennkraftmaschine vorzuheizen. Durch das Vorheizen des Kraftstoffs werden dessen Temperatur und Entflammbarkeit erhöht. Insbesondere wird dadurch die Viskosität reduziert. In diesem Zusammenhang kommen die eingangs genannten Vorheizeinrichtungen zum Einsatz.

Aus der DE 101 40 071 A ist ein separater Heizkreislauf für die Erwärmung des Kraftstoffs bekannt, wobei eine speziell dafür ausgestaltete Einspritzdüse einen zusätzlichen Anschluss für den Heizkreislauf aufweist. Eine derartige Lösung ist aufwändig und benötigt vergleichsweise viel Bauraum.

Aus der DE 10 2009 001 062 A ist es bekannt, den Kraftstoff durch aufgeheizte Ventilluft zu erwärmen, wobei auch hier eine spezielle Einspritzdüse erforderlich ist.

Aus der FR 2 876 161 A ist es bekannt, in eine Kraftstoffverteilerleiste eine Heizeinrichtung zu integrieren. Hierbei ist ein vergleichsweise großes Kraftstoffvolumen zu erwärmen, um für den Startbetrieb den vorgewärmten Kraftstoff bereitstellen zu können. Dies erfordert vergleichsweise viel elektrische Energie und Zeit.

Aus der EP 1 888 910 B1 ist eine Kraftstoffeinspritzanlage bekannt, die eine Verteilerleiste zum Bereitstellen von flüssigem Kraftstoff aufweist. Ferner sind mehrere Vorheizeinrichtungen der eingangs genannten Art vorgesehen, die jeweils einen Vorheizraum enthalten, die jeweils ein Heizelement aufweisen und die jeweils über einen Einlassanschluss an die Verteilerleiste angeschlossen sind. Des Weiteren sind mehrere Kraftstoffinjektoren oder Einspritzdüsen vorgesehen, die jeweils über einen Auslassanschluss an eine solche Vorheizeinrichtung angeschlossen sind. Für jeden Kraftstoffinjektor ergibt sich dadurch ein Kraftstoffpfad, der von der Verteilerleiste durch den jeweiligen Vorheizraum zum jeweiligen Kraftstoffinjektor führt. Bei der bekannten Kraftstoffeinspritzanlage bzw. bei der bekannten Vorheizeinrichtung ist das jeweilige Heizelement als Glühstab oder Glühstift ausgestaltet, der koaxial in den jeweiligen Vorheizraum hineinragt. Des Weiteren ist bei der bekannten Vorheizeinrichtung ein den jeweiligen Vorheizraum enthaltendes Gehäuse aus Metall hergestellt und im eingebauten Zustand mit der Verteilerleiste verschweißt.

Eine gattungsgemäße Vorheizeinrichtung ist aus der JP 2010 101294 A bekannt und umfasst einen Einlassanschluss zum Anschließen der Vorheizeinrichtung an eine Verteilerleiste einer Kraftstoffeinspritzanlage der Brennkraftmaschine, einen Auslassanschluss zum Anschließen eines Kraftstoffinjektors der Kraftstoffeinspritzanlage an die Vorheizeinrichtung, einen vom Kraftstoff durchströmbaren Vorheizraum, der mit dem Einlassanschluss und mit dem Auslassanschluss fluidisch verbunden ist, wenigstens ein elektrisches Heizelement zum Beheizen des Kraftstoffs im Vorheizraum und zumindest einen metallischen Heizkörper, der im Vorheizraum dem Kraftstoff ausgesetzt ist. Bei der bekannten Vorheizeinrichtung sind die Heizelemente außen an dem vom Kraftstoff durchströmten, rohrförmigen Heizkörper angeordnet.

Die vorliegende Erfindung beschäftigt sich mit dem Problem, für eine Kraftstoffeinspritzanlage bzw. für eine Vorheizeinrichtung eine verbesserte Ausführungsform anzugeben, die sich insbesondere durch einen effizienten Wärmeeintrag in den Kraftstoff auszeichnet, so dass mit vergleichsweise wenig elektrischer Energie in vergleichsweise kurzer Zeit eine hinreichende Erwärmung des Kraftstoffs erzielbar ist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die jeweilige Vorheizeinrichtung mit wenigstens einem metallischen Heizkörper auszustatten, in dem sich das wenigstens eine elektrische Heizelement befindet und der in der Vorheizeinrichtung so angeordnet ist, dass er dem Kraftstoff ausgesetzt ist. Hierdurch wird erreicht, dass das jeweilige Heizelement den jeweiligen Heizkörper beheizen kann, so dass die Beheizung des Kraftstoffs im Wesentlichen durch den Heizkörper erfolgt. Ein derartiger metallischer Heizkörper besitzt eine vergleichsweise hohe Wärmeleitfähigkeit, was eine effiziente Wärmeübertragung auf den Kraftstoff ermöglicht. Ferner lässt sich mit Hilfe des Heizkörpers die mit dem Kraftstoff in Kontakt kommende Oberfläche gegenüber der Oberfläche des jeweiligen Heizelements signifikant vergrößern, was ebenfalls die Menge der übertragbaren Wärme vergrößert. Besonders einfach lässt sich jedoch ein derartiger Heizkörper so gestalten, dass ein direkter Kontakt zwischen Kraftstoff und Heizelement vermieden werden kann, so dass das jeweilige Heizelement also keinen Kontakt mit dem Kraftstoff besitzt. Die Vorheizeinrichtung lässt sich somit besonders einfach so realisieren, dass das jeweilige Heizelement den Kraftstoff ausschließlich indirekt, nämlich über den Heizkörper erwärmt. Eine derartige Ausführungsform ist vor allem dann von besonderem Vorteil, wenn Heizelemente verwendet werden sollen, die gegenüber dem Kraftstoff empfindlich, insbesondere korrosionsgefährdet sind. Hierdurch ist es zum Beispiel möglich, für die Heizelemente preiswertere Ausführungsformen zu verwenden, deren Materialien eine höhere Korrosionsgefahr zeigen.

Besonders vorteilhaft ist in diesem Zusammenhang eine Ausführungsform, bei welcher das jeweilige Heizelement ein PTC-Element ist. "PTC" steht dabei für "Positive Temperature Coefficient", also "positiver Temperaturkoeffizient". PTC-Elemente zeichnen sich dadurch aus, dass sie elektrische Energie in Wärme umwandeln, wobei gleichzeitig ihr elektrischer Widerstand mit steigender Temperatur exponentiell zunimmt. Somit lassen sich PTC-Elemente besonders einfach so auslegen, dass sie bei daran anliegender Spannung gezielt eine vorbestimmte Temperatur erreichen und halten können. Dabei ist keine aufwändige elektronische Regelung oder Steuerung erforderlich, da der elektrische Widerstand des PTC-Elements bei Erreichen der vorbestimmten Temperatur quasi unendlich groß wird. Die Verwendung derartiger PTC-Elemente ermöglicht also die gewünschte Vorheizung, ohne dass hierzu eine elektronische Steuerung oder Regelung des Heizelements erforderlich ist. Zwar kann grundsätzlich somit eine elektronische Steuerung weggelassen werden, jedoch kann trotzdem eine elektronische Steuerung reduzierter Komplexität vorgesehen sein, um das jeweilige PTC-Element zu steuern und/oder zu überwachen. PTC-Elemente lassen sich beispielsweise besonders einfach als ebene Plattenkörper realisieren, also als flache Quader, mit zwei voneinander abgewandten, relativ großflächigen Außenseiten, die gleichzeitig die beiden elektrischen Kontakte oder Anschlüsse des PTC-Elements bilden. Preiswerte PTC-Elemente zeigen in Verbindung mit Kraftstoffen eine vergleichsweise hohe Korrosionsgefahr. Durch die erfindungsgemäß vorgeschlagene Verwendung wenigstens eines Heizkörpers, in dem das jeweilige Heizelement untergebracht ist, lässt sich ein unmittelbarer Kontakt zwischen dem jeweiligen Heizelement und dem Kraftstoff leicht vermeiden, so dass preiswerte PTC-Elemente als Heizelemente verwendet werden können.

Entsprechend einer anderen vorteilhaften Ausführungsform können ein erster Elektroanschluss und ein zweiter Elektroanschluss vorgesehen sein, die an eine elektrische Energieversorgung anschließbar sind, um das jeweilige Heizelement mit elektrischer Energie zu versorgen. Der erste Elektroanschluss kann nun mit einem Kontaktelement elektrisch verbunden sein, vorzugsweise direkt, das seinerseits mit einem ersten elektrischen Anschluss des jeweiligen Heizelements elektrisch verbunden ist, vorzugsweise direkt. Der zweite Elektroanschluss kann dagegen mit dem jeweiligen Heizkörper elektrisch verbunden sein, vorzugsweise direkt, der seinerseits mit einem zweiten elektrischen Anschluss des jeweiligen Heizelements elektrisch verbunden ist, vorzugsweise direkt. Die Erfindung nutzt hier die Erkenntnis, dass der metallische Heizkörper seinerseits elektrisch leitend ist, so dass er gemäß dem vorliegenden Vorschlag in die elektrische Kontaktierung des jeweiligen Heizelements integriert wird. Hierdurch vereinfacht sich die Elektrifizierung des jeweiligen Heizelements, da auf zusätzliche elektrische Leiter sowie eine hierfür erforderliche elektrische Isolation verzichtet werden kann.

Entsprechend einer vorteilhaften Weiterbildung kann das Kontaktelement als Feder ausgestaltet sein, die das jeweilige Heizelement gegen den Heizkörper vorspannt. Hierdurch erhält das Kontaktelement eine Doppelfunktion, dass zum einen die elektrische Verbindung zwischen dem ersten Elektroanschluss und dem ersten elektrischen Anschluss des jeweiligen Heizelements schafft und zum anderen das jeweilige Heizelement mit dem zugehörigen Heizkörper verspannt, wodurch zum einen die elektrische Kontaktierung zwischen dem Heizkörper und dem zweiten elektrischen Anschluss des Heizelements und zum anderen die Wärmeübertragung zwischen Heizelement und Heizkörper verbessert wird.

Bei einer anderen Ausführungsform kann das jeweilige Heizelement vom jeweiligen Heizkörper vollständig und dicht umschlossen sein. Hierdurch wird das jeweilige Heizelement vom jeweiligen Heizkörper hermetisch dicht gekapselt. Hierdurch lässt sich mit hoher Sicherheit eine Kontaktierung zwischen Kraftstoff und Heizelement vermeiden. Ferner vereinfacht sich dadurch das Einsetzen des Heizkörpers in den Vorheizraum.

Bei einer anderen Ausführungsform kann der jeweilige Heizkörper wenigstens eine Innenschale und wenigstens eine Außenschale aufweisen, zwischen denen das jeweilige Heizelement angeordnet ist. Zwischen Innenschale und Außenschale lässt sich besonders einfach ein Zwischenraum zur Unterbringung wenigstens eines Heizelements schaffen, der sich außerdem besonders einfach dicht verschließen lässt. Beispielsweise lässt sich dieser Zwischenraum mit einer geeigneten Dichtungsmasse, z.B. Kunstharz, ausgießen.

Bei einer nicht erfindungsgemäßen Ausführungsform kann der jeweilige Heizkörper so ausgestaltet sein, dass er im eingebauten Zustand den Vorheizraum umschließt, wobei der Heizkörper einen mit dem Einlassanschluss fluidisch verbundenen Einlass und einen mit dem Auslassanschluss fluidisch verbundenen Auslass aufweist. Dabei ist der Heizkörper in ein Gehäuse der Vorheizeinrichtung eingesetzt, das den Einlassanschluss und den Auslassanschluss aufweist. Ferner ist der Heizkörper gegenüber dem Gehäuse abgedichtet, derart, dass der Kraftstoff nur mit einer dem Vorheizraum zugewandten Innenseite des Heizkörpers in Kontakt kommen kann. Durch diese Bauweise lassen sich im Heizkörper besonders einfach mehrere Heizelemente unterbringen, die in der Umfangsrichtung verteilt angeordnet sind, wodurch sich eine intensive Beheizung des Heizkörpers realisieren lässt.

Der Einlassanschluss kann gemäß einer vorteilhaften Weiterbildung einen Einlassstutzen aufweisen, der vom Gehäuse nach innen absteht und dabei durch den Einlass des Heizkörpers hindurch im Vorheizraum mündet. Dabei kann der Einlassstutzen senkrecht zum Auslassanschluss orientiert sein. Insbesondere kann sich der Einlassstutzen bezüglich einer Axialrichtung des Heizkörpers radial erstrecken. Zweckmäßig ist der Einlassstutzen dann bezüglich des Gehäuses ein separates Bauteil, das auf geeignete Weise an das Gehäuse angebaut ist. Beispielsweise kann der Einlassstutzen mit dem Gehäuse verschweißt sein.

Des Weiteren kann zwischen dem Einlassstutzen und dem Heizkörper ein Dichtring vorgesehen sein. Zusätzlich oder alternativ kann zwischen dem Gehäuse und dem Heizkörper ein Dichtring vorgesehen sein.

Grundsätzlich gilt für alle Ausführungsformen, dass der Einlassanschluss mit einem solchen Einlassstutzen ausgestattet sein kann, der bezüglich des Gehäuses ein separates Bauteil bildet und an das Gehäuse angebaut ist, wobei eine Schweißverbindung zwischen Einlassstutzen und Gehäuse bevorzugt wird. Ferner kann das Gehäuse einen bezüglich des übrigen Gehäuses separaten Deckel aufweisen, der eine Gehäuseöffnung verschließt und auf geeignete Weise an das Gehäuse angebaut ist. Bevorzugt wird auch hier eine Schweißverbindung. Die am Gehäuse vorgesehenen Elektroanschlüsse zur Versorgung der elektrischen Heizelemente mit elektrischer Energie sind bevorzugt durch den Deckel dicht hindurchgeführt.

Bei einer anderen nicht erfindungsgemäßen Ausführungsform kann der jeweilige Heizkörper als axial offener Hohlkörper ausgestaltet sein, der so im Vorheizraum angeordnet ist, dass er mit einer radialen Außenseite und mit einer radialen Innenseite mit dem Kraftstoff in Kontakt kommt. Hierdurch lässt sich die mit dem Kraftstoff in Kontakt stehende Oberfläche des Heizkörpers vergrößern, was die Effizienz der Wärmeübertragung verbessert.

Gemäß einer ebenfalls nicht erfindungsgemäßen Weiterbildung kann wieder ein Gehäuse vorgesehen sein, das den Einlassanschluss und den Auslassanschluss aufweist und das den Vorheizraum umschließt. Das Gehäuse kann außerdem einen Auslasskanal aufweisen, der vom Auslassanschluss ausgeht und in den Vorheizraum axial hineinragt. Der jeweilige, als axial offener Hohlkörper ausgestaltete Heizkörper kann nun im Gehäuse so angeordnet werden, dass er sich koaxial zum Auslasskanal erstreckt. Hierdurch lässt sich ein Kraftstoffpfad realisieren, der vom Einlassanschluss durch einen Außenspalt zwischen dem Gehäuse und der Außenseite des Heizkörpers, durch eine axiale Lücke zwischen dem Gehäuse und einer dem Auslassanschluss zugewandten Stirnseite des Heizkörpers, durch einen Innenspalt zwischen dem Auslasskanal und der Innenseite des Heizkörpers und durch den Auslasskanal zum Auslassanschluss führt. Hierdurch wird eine gezielte Strömungsführung entlang der beheizten Flächen des Heizkörpers realisiert, was die Wärmeübertragung verbessert.

Eine weitere Vergrößerung der zur Verfügung stehenden Oberfläche des Heizkörpers lässt sich mit Hilfe einer Diagonalstrebe realisieren, die sich zweckmäßig über die gesamte Höhe des hohlen Heizkörpers erstreckt und dadurch den vom Heizkörper umschlossenen Innenraum in zwei Teilräume unterteilt. Eine derartige Diagonalstrebe lässt sich besonders einfach dadurch realisieren, dass in eine Außenschale des Heizkörpers zwei Innenschalen eingesetzt werden, die im Bereich der Diagonalstrebe aneinander anliegen und dadurch die Diagonalstrebe bilden. Sofern eine derartige Diagonalstrebe vorgesehen ist, kann der Auslasskanal axial geschlitzt sein, so dass die Diagonalstrebe in zwei sich diametral gegenüberliegende Längsschlitze des Auslasskanals einsetzbar ist. Hierdurch ergibt sich gleichzeitig eine verbesserte Positionierung des Heizkörpers im Gehäuse.

Erfindungsgemäß weist der jeweilige Heizkörper einen Basisabschnitt und einen vom Basisabschnitt ausgehenden Tauchabschnitt auf, wobei der Tauchabschnitt das jeweilige Heizelement enthält und so in den Vorheizraum eintaucht, dass er an seiner Außenseite mit dem Kraftstoff in Kontakt kommt, während der Basisabschnitt innerhalb eines Gehäuses der Vorheizeinrichtung den Vorheizraum dicht verschließt und Elektroanschlüsse zur Versorgung des wenigstens einen Heizelements mit elektrischer Energie aufweist. Der Heizkörper kann somit im Gehäuse den mit Kraftstoff befüllten bzw. befüllbaren Vorheizraum von einem trockenen Raum trennen, in dem beispielsweise elektrische Kontakte bzw. elektrische Leitungen verlaufen. Somit lassen sich die Heizelemente beispielsweise an einer vom Vorheizraum abgewandten Seite einfach in den Tauchabschnitt einsetzen. Hierzu kann der Heizkörper im Basisabschnitt eine Durchgangsöffnung aufweisen, durch die ein vom Tauchabschnitt umschlossener Aufnahmeraum zur Unterbringung des jeweiligen Heizelements zugänglich ist. Diese Durchgangsöffnung muss dabei nicht dicht verschlossen werden, da sie zum Trockenraum hin offen ist. Ferner vereinfacht sich dadurch die Elektrifizierung der Heizelemente.

Ferner sind Tauchabschnitt und Basisabschnitt am jeweiligen Heizkörper vorzugsweise integral ausgeformt, wodurch eine Montage sowie eine separate Abdichtung der Abschnitte gegeneinander entfallen kann.

Insbesondere können die Elektroanschlüsse auch hier durch einen Deckel des Gehäuses hindurchgeführt sein, wobei dieser Deckel eine Gehäuseöffnung verschließt, durch die hindurch der Heizkörper in das Gehäuse einsetzbar ist. Der Basisabschnitt kann an einer Außenkontur eine geschlossen umlaufende Dichtung aufweisen, die den Basisabschnitt gegenüber dem Gehäuse dicht verschließt. In den Basisabschnitt oder in die zuvor genannte Durchgangsöffnung des Basisabschnitts kann ein elektrischer Isolator eingesetzt sein, um ein Kontaktelement, das den ersten Elektroanschluss mit dem jeweiligen ersten elektrischen Anschluss des jeweiligen Heizelements elektrisch verbindet, aus dem vom Tauschabschnitt umschlossenen Aufnahmeraum des Heizkörpers gegenüber dem Heizkörper elektrisch isoliert herauszuführen. Der zweite Elektroanschluss kann unmittelbar mit dem Heizkörper, vorzugsweise mit dem Basisabschnitt, elektrisch verbunden sein, sofern auch hier der Heizkörper, vorzugsweise mit seinem Tauchabschnitt, unmittelbar mit dem jeweiligen zweiten elektrischen Anschluss des jeweiligen Heizelements kontaktiert ist.

Bei einer erfindungsgemäßen ersten Variante weist der Tauchabschnitt an seiner Außenseite eine Strömungsführung auf, die einen vom Einlassanschluss zum Auslassanschluss führenden Kraftstoffpfad in der Umfangsrichtung zumindest teilweise um den Tauchabschnitt herumführt. Hierdurch wird der Kraftstoffpfad signifikant verlängert, was den Wärmeeintrag in dem Kraftstoff verbessert. Gleichzeitig kann die Strömungsführung zusätzliche Oberfläche zur Wärmeübertragung bereitstellen. Hierzu ist die Strömungsführung vorzugsweise metallisch. Insbesondere ist die Strömungsführung integral am metallischen Heizkörper ausgeformt.

Bei einer vorteilhaften Weiterbildung kann diese Strömungsführung nach außen vom Tauchabschnitt abstehen und sich schraubenförmig um den Tauchabschnitt herumwinden. Hierdurch wird eine besonders effiziente Verlängerung des Kraftstoffpfads erreicht. Zweckmäßig erstreckt sich die Strömungsführung in der Umfangsrichtung wenigstens über eine vollständige Windung, also mindestens über 360°.

Bei einer erfindungsgemäßen zweiten Variante weist der Tauchabschnitt an seiner Außenseite mehrere Rippen auf, die sich quer zu einer zum Auslassanschluss fluchtenden Axialrichtung erstrecken und in dieser Axialrichtung zueinander beabstandet sind, derart, dass ein vom Einlassanschluss zum Auslassanschluss führender Kraftstoffpfad zwischen benachbarten Rippen hindurchführt. Auch diese Rippen führen zu einer signifikanten Vergrößerung der mit dem Kraftstoff in Kontakt stehenden Oberfläche, was die Wärmeübertragung begünstigt. Diese Rippen können sich dabei jeweils in der Umfangsrichtung geschlossen erstrecken, wodurch sie insbesondere als Plattenstapel realisierbar sind, der eine Vielzahl, die Rippen bildende Platten aufweist, die in der Axialrichtung aufeinander gestapelt sind, wobei geeignete Maßnahmen, wie zum Beispiel Distanzelemente, dafür sorgen, dass benachbarte Platten zueinander beabstandet sind. Alternativ lässt sich der Heizkörper mit diesen Platten bzw. mit den Rippen integral aus einem Stück herstellen.

Alternativ können die Rippen auch mit Hilfe eines Bandmaterials gebildet sein, das mehrfach gefaltet ist, derart, dass eine Vielzahl gefalteter Abschnitte parallel zueinander sowie zueinander beabstandet verlaufen und die einzelnen Rippen bilden. Benachbarte Rippen sind dann über Biegeabschnitte miteinander verbunden, in denen das Bandmaterial um etwa 180° umgebogen ist.

Unabhängig davon, dass die Rippen mit Hilfe separater Platten oder mit Hilfe eines durchgehenden Bandmaterials gebildet sind, können die Rippen gelocht sein, um Querströmungen zu verbessern.

Gemäß einer vorteilhaften Weiterbildung kann der Tauchabschnitt an einer dem Einlassanschluss zugewandten Einlassseite einen axial verlaufenden Verteilerkanal aufweisen, der durch mehrere oder durch alle Rippen hindurchführt. Durch diesen Einlasskanal kann sich der zugeführte Kraftstoff auf sämtliche Rippen bzw. auf sämtliche Zwischenräume, die zwischen benachbarten Rippen ausgebildet sind, aufteilen. Dies begünstigt eine gleichmäßige Beaufschlagung der Rippen mit Kraftstoff.

Zusätzlich oder alternativ kann der Auslassanschluss an einer vom Einlassanschluss abgewandten Auslassseite des Tauchabschnitts zum Vorheizraum hin offen sein. Hierdurch wird erreicht, dass der Kraftstoff die zwischen den Rippen ausgebildeten Zwischenräume durchströmen muss, um von der dem Einlassanschluss zugewandten Einlassseite des Tauchabschnitts zu der dem Auslassanschluss zugewandten Auslassseite des Tauchabschnitts gelangen zu können. Auch diese Maßnahme führt zu einer verbesserten Wärmeübertragung.

Zusätzlich oder alternativ kann der Tauchabschnitt an seiner dem Auslassanschluss zugewandten Auslassseite einen axial verlaufenden Sammelkanal aufweisen, der durch mehrere oder durch alle Rippen hindurchführt. Der Sammelkanal führt die durch die Zwischenräume der Rippen hindurchströmenden Teilströme des Kraftstoffs zusammen und reduziert den Strömungswiderstand.

Gemäß einer besonders vorteilhaften Ausführungsform kann der Einlassanschluss eine konvergierende Düse aufweisen, also einen sich in der Strömungsrichtung des Kraftstoffs verjüngenden Strömungsquerschnitt besitzen. Es hat sich gezeigt, dass eine derartige Düse, die im Vorheizraum und somit in einer plötzlichen Querschnittserweiterung mündet, vorteilhaft ist im Hinblick auf reduzierte Wärmeverluste. Die Konvergenz der Düse kann vergleichsweise stark ausgeprägt sein. Beispielsweise kann ein Düsenaustrittsquerschnitt um wenigstens 50 %, vorzugsweise um etwa 75 %, kleiner sein als ein Düseneintrittsquerschnitt.

Gemäß einer bevorzugten, bereits genannten Ausführungsform kann das jeweilige Heizelement ein PTC-Element sein. Vorzugsweise kommen je Heizkörper mehrere Heizelemente zu Einsatz. Die einzelnen Heizelemente sind bevorzugt ebene Plattenkörper, z.B. mit Rechteckquerschnitt, und können eine flache und quaderförmige Geometrie besitzen. Zweckmäßig handelt es sich bei den verwendeten Heizelementen um Gleichteile, was die Stückzahl erhöht und den Stückpreis reduziert.

Eine preiswerte Realisierbarkeit der Vorheizeinrichtung wird insbesondere auch dadurch unterstützt, dass das Gehäuse aus Kunststoff hergestellt werden kann.

Eine erfindungsgemäße Kraftstoffeinspritzanlage für eine Brennkraftmaschine, vorzugsweise eines Kraftfahrzeugs, umfasst zumindest eine Verteilerleiste zum Bereitstellen von flüssigem Kraftstoff, mehrere Vorheizeinrichtungen der vorstehend beschriebenen Art, die jeweils an die Verteilerleiste angeschlossen sind, und mehrere Kraftstoffinjektoren, die jeweils an eine solche Vorheizeinrichtung angeschlossen sind. Dabei führt ein Kraftstoffpfad von der Verteilerleiste durch den jeweiligen Vorheizraum zum jeweiligen Kraftstoffinjektor.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

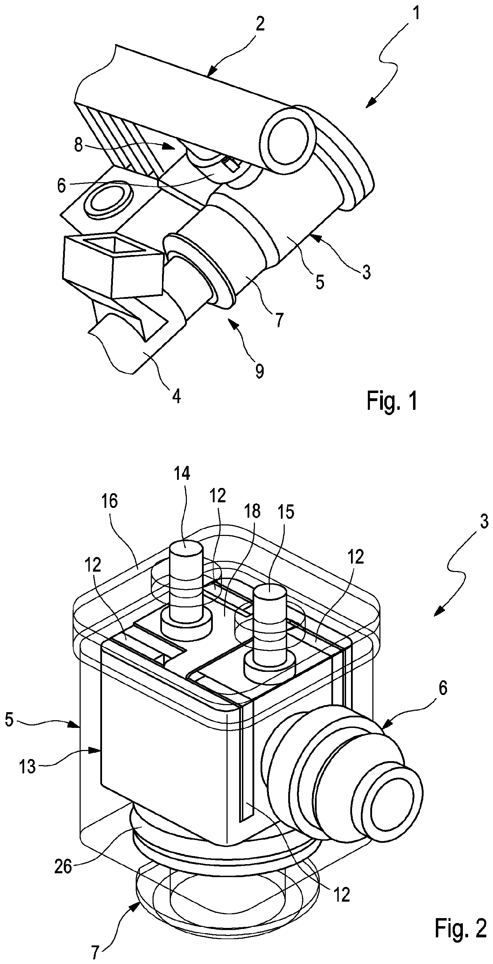

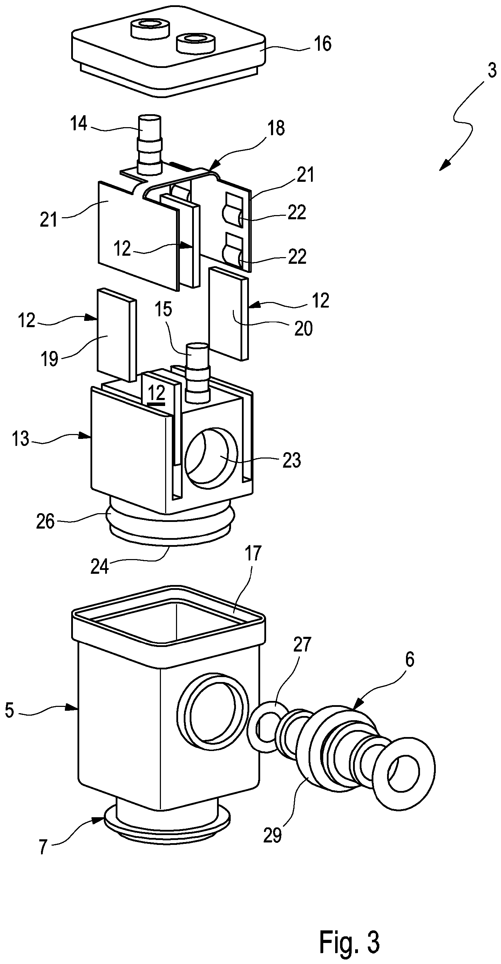

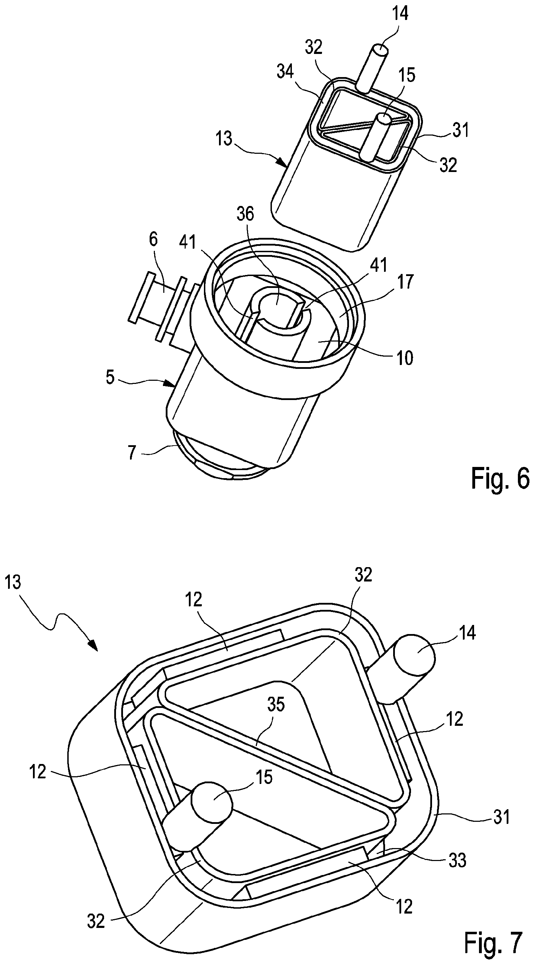

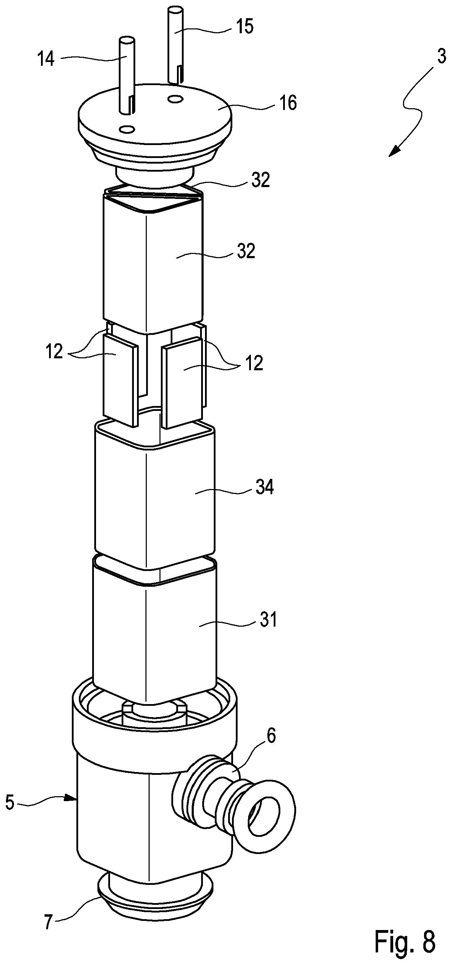

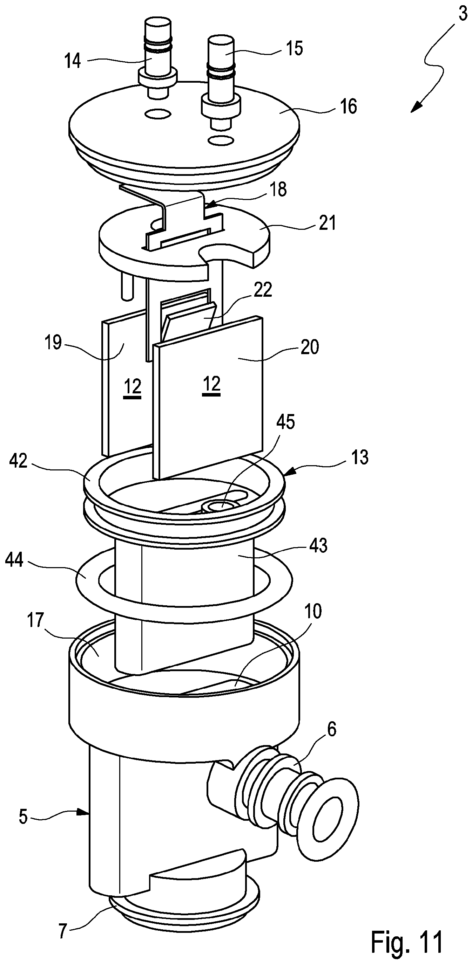

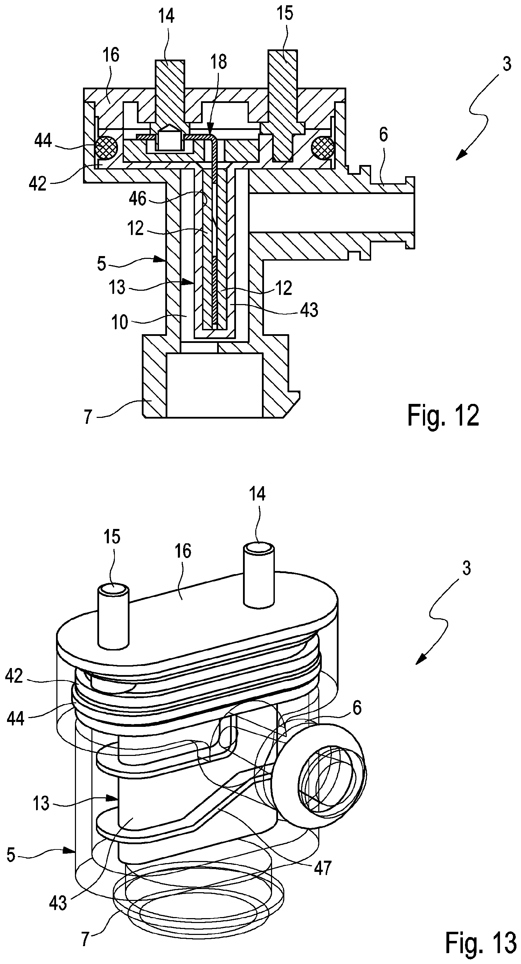

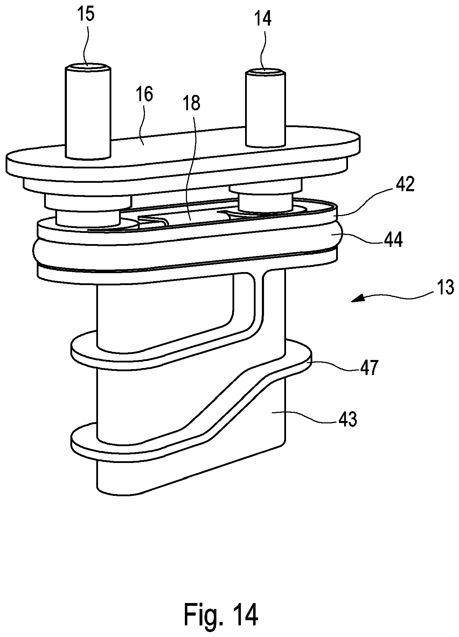

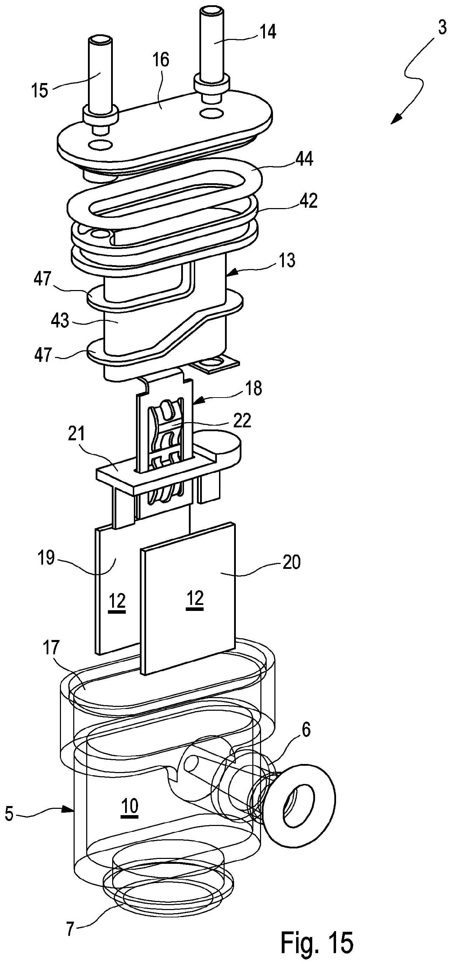

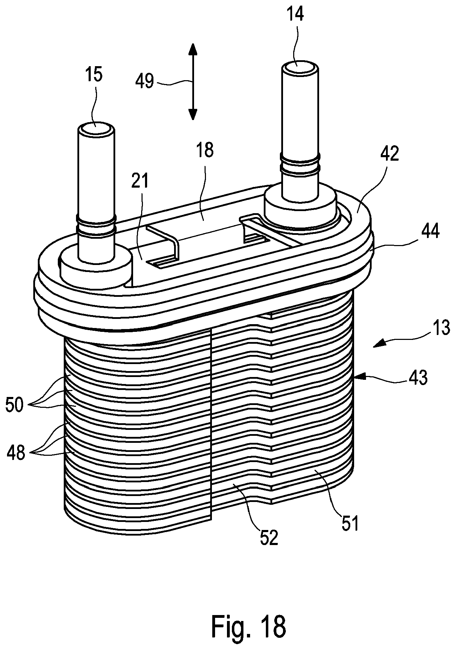

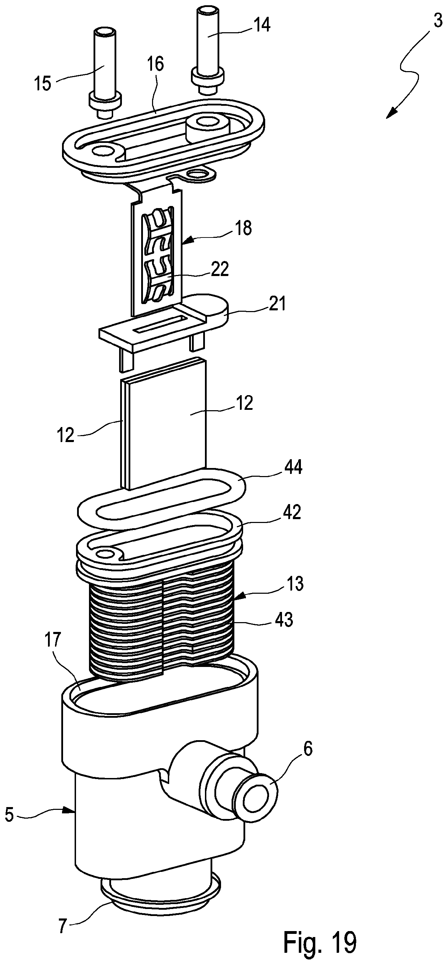

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Die Figuren 13 bis 23 zeigen dabei erfindungsgemäße Ausführungsformen der Vorheizeinrichtung, während die Figuren 2 bis 12 nicht erfindungsgemäße Ausführungsformen der Vorheizeinrichtung zeigen und Figur 1 eine erfindungsgemäße Ausführungsform der Kraftstoffeinspritzanlage zeigt.

Es zeigen, jeweils schematisch:
- Fig. 1: eine isometrische Ansicht einer erfindungsgemäßen Kraftstoffeinspritzanlage im Bereich einer Vorheizeinrichtung,
- Fig. 2-4: verschiedene Ansichten der Vorheizeinrichtung gemäß einer nicht erfindungsgemäßen ersten Ausführungsform,
- Fig. 5-9: verschiedene Ansichten der Vorheizeinrichtung gemäß einer nicht erfindungsgemäßen zweiten Ausführungsform,
- Fig. 10-12: verschiedene Ansichten der Vorheizeinrichtung gemäß einer nicht erfindungsgemäßen dritten Ausführungsform,
- Fig. 13-16: verschiedene Ansichten der Vorheizeinrichtung gemäß einer erfindungsgemäßen vierten Ausführungsform,
- Fig. 17-20: verschiedene Ansichten der Vorheizeinrichtung gemäß einer erfindungsgemäßen fünften Ausführungsform,
- Fig. 21: eine isometrische Schnittansicht eines Tauchabschnitts der Vorheizeinrichtung, bei einer weiteren erfindungsgemäßen Ausführungsform,
- Fig. 22: eine isometrische Ansicht einer als Platte ausgebildeten Rippe,
- Fig. 23: eine isometrische Ansicht einer Rippenstruktur eines Tauchabschnitts bei einer anderen erfindungsgemäßen Ausführungsform der Vorheizeinrichtung.

Entsprechend Figur 1 umfasst eine Kraftstoffeinspritzanlage 1, die bei einer hier nicht gezeigten Brennkraftmaschine zur Versorgung von Brennräumen der Brennkraftmaschine mit Kraftstoff dient, zumindest eine Verteilerleiste 2, mehrere Vorheizeinrichtungen 3 und mehrere Kraftstoffinjektoren 4. Die Verteilerleiste 2, die auch als "Rail" oder "Common Rail" bezeichnet werden kann, dient zum Bereitstellen von flüssigem Kraftstoff. Die jeweilige Vorheizeinrichtung 3 dient zum Vorheizen des Kraftstoffs bevor er zum jeweiligen Kraftstoffinjektor 4 gelangt. Zu diesem Zweck sind die Vorheizeinrichtungen 3 fluidisch zwischen der Verteilerleiste 2 und dem jeweiligen Kraftstoffinjektor 4 angeordnet. Dementsprechend umfasst die Vorheizeinrichtung 3 ein Gehäuse 5, das einen Einlassanschluss 6 aufweist, mit dem die Vorheizeinrichtung 3 direkt an die Verteilerleiste 2 anschließbar ist. Ferner weist das Gehäuse 5 einen Auslassanschluss 7 auf, über den der jeweilige Kraftstoffinjektor 4 direkt an die jeweilige Vorheizeinrichtung 3 anschließbar ist. Zum Anschließen der Vorheizeinrichtung 3 an die Verteilerleiste 2 kann eine erste Steckverbindung 8 vorgesehen sein. Zum Anschließen des Injektors 4 an die Vorheizeinrichtung 3 kann eine zweite Steckverbindung 9 vorgesehen sein. Die jeweilige Steckverbindung 8, 9 kann dabei als "reine" Steckverbindung konzipiert sein, bei welcher die zu steckenden Komponenten nur ineinander gesteckt werden. Gegen ein Herausziehen der gesteckten Komponenten kann dann eine zusätzliche Sicherung vorgesehen sein. Alternativ kann die jeweilige Steckverbindung 8, 9 auch als Bajonettverschluss konzipiert sein, bei dem eine Steckbewegung mit einer Drehbewegung kombiniert ist. Durch die Drehbewegung kann eine Sicherung gegen ein Herausziehen realisiert werden.

Entsprechend den Figuren 2 bis 20 umfasst die jeweilige Vorheizeinrichtung 3 somit das Gehäuse 5, das den Einlassanschluss 6 und den Auslassanschluss 7 aufweist und in dem einen Vorheizraum 10 angeordnet ist. Dieser Vorheizraum 10 ist mit dem Einlassanschluss 6 und mit dem Auslassanschluss 7 fluidisch verbunden, so dass ein in den Figuren 2 bis 20 durch Pfeile angedeuteter Kraftstoffpfad 11, der vom Einlassanschluss 6 zum Auslassanschluss 7 führt, durch den Vorheizraum 10 hindurchführt. Des Weiteren ist die Vorheizeinrichtung 3 mit wenigstens einem elektrischen Heizelement 12 ausgestattet, mit dessen Hilfe der Kraftstoff im Vorheizraum 10 beheizt werden kann. Bei den hier gezeigten Ausführungsformen sind je Vorheizeinrichtung 3 jeweils mehrere Heizelemente 12 vorgesehen, die zweckmäßig jeweils baugleich konzipiert sind. Bei den Heizelementen 12 handelt es sich bevorzugt um PTC-Elemente, die hier als ebene Platten mit rechteckigem Querschnitt konzipiert sind. Geometrisch handelt es sich dabei jeweils um einen flachen Quader.

Des Weiteren ist die Vorheizeinrichtung 3 jeweils mit zumindest einem metallischen Heizkörper 13 ausgestattet. Dieser Heizkörper 13 ist im Gehäuse 5 angeordnet und darin dem Kraftstoff ausgesetzt. Die Heizelemente 12 sind im Heizkörper 13 angeordnet. Der Heizkörper 13 bildet bezüglich der Heizelemente 12 ein separates Bauteil, in das die Heizelemente 12 eingesetzt sind.

Am Gehäuse 5 sind außerdem zwei Elektroanschlüsse, nämlich ein erster Elektroanschluss 14 und ein zweiter Elektroanschluss 15 angeordnet, die an eine elektrische Energieversorgung anschließbar sind und die zur Versorgung der elektrischen Heizelemente 12 mit elektrischer Energie dienen. Zweckmäßig sind diese Elektroanschlüsse 14, 15 durch einen Deckel 16 des Gehäuses 5 dicht hindurchgeführt, der eine Montageöffnung 17 des Gehäuses 5 verschließt, durch die der Heizkörper 13 in das Gehäuse 5 einsetzbar ist.

Bei den Ausführungsformen der Figuren 2 bis 4 und 10 bis 20 ist der erste Elektroanschluss 14 mit einem Kontaktelement 18 direkt elektrisch verbunden. Das Kontaktelement 18 ist mit einem ersten elektrischen Anschluss 19 des jeweiligen Heizelements 12 direkt elektrisch verbunden. Der zweite Elektroanschluss 15 ist mit dem jeweiligen metallischen Heizkörper 13 direkt elektrisch verbunden. Der Heizkörper 13 ist mit einem zweiten elektrischen Anschluss 20 des jeweiligen Heizelements 12 direkt elektrisch verbunden. Die beiden elektrischen Anschlüsse 19, 20 des jeweiligen Heizelements 12 sind dabei durch zwei voneinander abgewandte Außenseite des plattenförmigen Heizelements 12 gebildet. Zwischen dem Kontaktelement 18 und dem Heizkörper 13 ist zweckmäßig ein elektrischer Isolator 21 vorgesehen, um einen elektrischen Kontakt zwischen dem Kontaktelement 18 und dem Heizkörper 13 zu vermeiden. Der elektrische Isolator 21 kann beispielsweise eine Wärmeleitfolie sein, z.B. ein Silicium-Pad oder eine dünne Platte aus Aluminiumnitrid oder Aluminiumoxid.

Das Kontaktelement 18 kann als Feder ausgestaltet sein bzw. zumindest einen federnden Abschnitt 22 aufweisen, wobei das federnde Kontaktelement 18 bzw. der jeweilige federnde Abschnitt 22 das jeweilige Heizelement 12 gegen den Heizkörper 13 vorspannt.

Die Figuren 2 bis 4 zeigen eine erste Ausführungsform der Vorheizeinrichtung 3. Bei dieser ersten Ausführungsform ist der Heizkörper 13 so ausgestaltet, dass er den Vorheizraum 10 in einer Umfangsrichtung umschließt. Der Heizkörper 13 besitzt einen mit dem Einlassanschluss 6 fluidisch verbundenen Einlass 23 und einen mit dem Auslassanschluss 7 fluidisch verbundenen Auslass 24. Der Heizkörper 13 besitzt gegenüber seinem Auslass 24 einen Boden 25, der den Vorheizraum 10 axial begrenzt. Der Einlass 23 ist seitlich bzw. radial angeordnet. Ferner ist der Heizkörper 13 gegenüber dem Gehäuse 5 abgedichtet. Hierzu wird ein erster Dichtring 26 zwischen dem Gehäuse 5 und dem Heizkörper 13 angeordnet. Ein zweiter Dichtring 27 wird zwischen dem Einlassanschluss 6 und dem Heizkörper 13 angeordnet. Hierdurch kann der Kraftstoff im Wesentlichen nur mit einer dem Vorheizraum 10 zugewandten Innenseite 28 des Heizkörpers 13 in Kontakt kommen. Es ist klar, dass grundsätzlich auch ein Kontakt durch kriechenden Kraftstoff bis zur jeweiligen Dichtung 26, 27 möglich ist.

Der Einlassanschluss 6 kann zumindest gemäß der ersten Ausführungsform der Figuren 2 bis 4 einen als separates Bauteil konzipierten Einlassstutzen 29 aufweisen, der auf geeignete Weise an das übrige Gehäuse 5 angebaut ist. Bevorzugt kommt hier eine Schweißverbindung zum Einsatz. Auch der Deckel 16 ist bevorzugt an das Gehäuse 5 angeschweißt. Der Einlassanschluss 6 kann außerdem eine Düse 30 aufweisen, die in der Strömungsrichtung konvergiert. Zweckmäßig ist die Düse 30 im Einlassstutzen 29 ausgebildet. Der Einlassstutzen 29 und/oder die Düse 30 kann/können auch bei den anderen hier gezeigten Ausführungsformen sowie bei weiteren, hier nicht gezeigten Ausführungsformen realisiert sein.

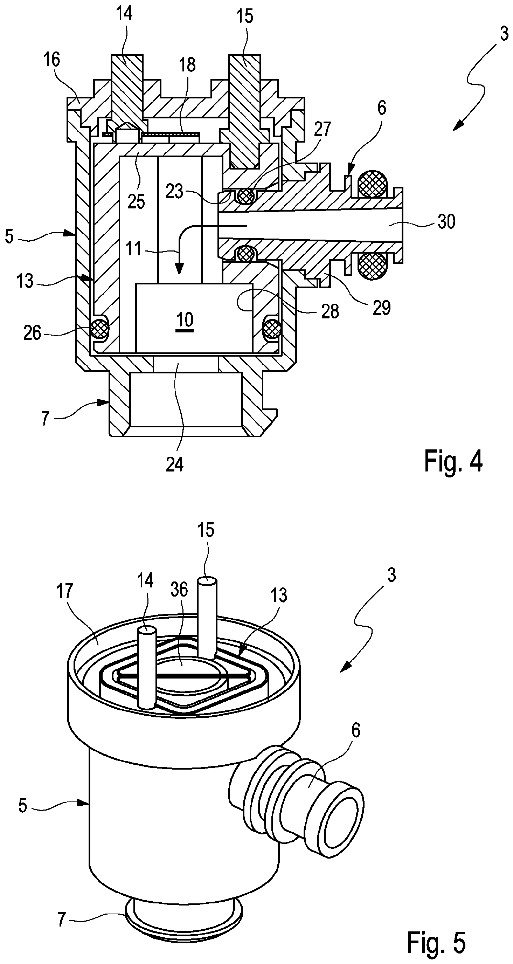

Die Figuren 5 bis 9 zeigen eine zweite Ausführungsform, bei der die Heizelemente 12 vom Heizkörper 13 vollständig und dicht umschlossen sind. Ferner ist bei der zweiten Ausführungsform der Heizkörper 13 in Schalenbauweise konzipiert, wobei er eine metallische Außenschale 31 und zwei darin eingesetzte metallische Innenschalen 32 aufweist. Zwischen der Außenschale 31 und den Innenschalen 32 ist ein Zwischenraum 33 ausgebildet, in den die Heizelemente 12 eingesetzt sind. Der verbleibende Zwischenraum 33 ist dann mit einer Vergussmasse 34 ausgegossen, wodurch der Zwischenraum 33 hermetisch dicht verschlossen wird und die Heizelemente 12 gekapselt sind.

Die elektrische Kontaktierung der Heizelemente 12 erfolgt hier derart, dass der erste Elektroanschluss 14 mit der metallischen Außenschale 31 direkt elektrisch verbunden ist, an der die Heizelemente 12 jeweils mit ihrer den ersten elektrischen Anschluss 19 bildenden Außenseite anliegen. Der zweite Elektroanschluss 15 ist an einer der metallischen Innenschalen 32 direkt angebracht. Die Innenschalen 32 stehen miteinander direkt in Kontakt. Ferner sind die Heizelemente 12 mit ihren den jeweiligen zweiten elektrischen Anschluss 20 bildenden Innenseiten direkt mit den Innenschalen 32 kontaktiert. Somit kann auf zusätzliche Kontaktelemente und Leiter verzichtet werden. Insbesondere kann vorgesehen sein, die Innenschalen 32 federelastisch auszugestalten und so zu dimensionieren, dass sie im montierten Zustand die Heizelemente 12 gegen die Außenschale 31 vorspannen, wodurch die Kontaktierung der Heizelemente 12 mit der Außenschale 31 einerseits und mit der jeweiligen Innenschale 32 andererseits verbessert wird.

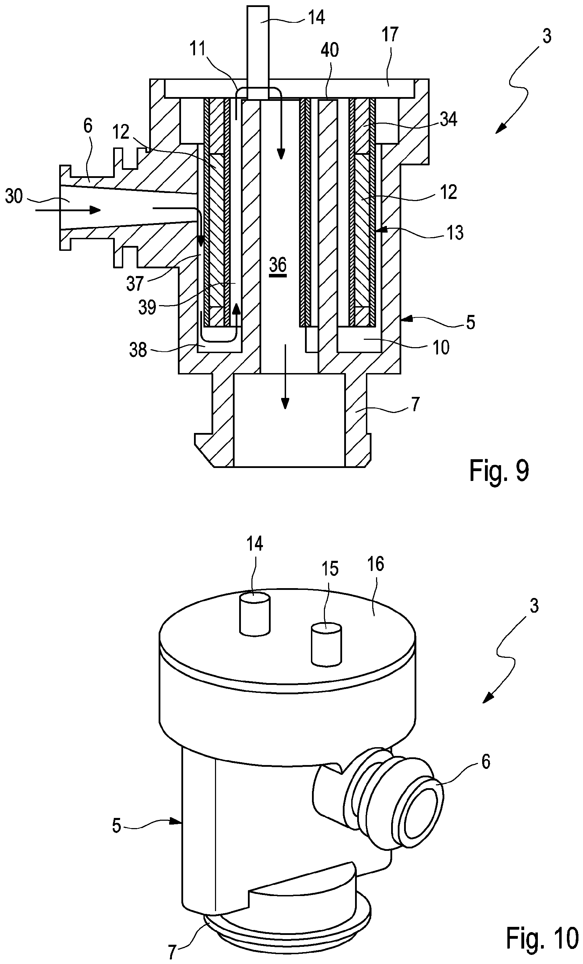

Beim hier gezeigten Beispiel besitzt die Außenschale 31 einen im Wesentlichen quadratischen Querschnitt, während die beiden Innenschalen 32 jeweils einen im Wesentlichen dreieckigen Querschnitt besitzen. Die Innenschalen 32 liegen so aneinander an, dass sie mit den aneinander anliegenden Seiten eine Diagonalstrebe 35 bilden, die einen Innenraum des Heizkörpers 13 in zwei Teilräume unterteilt. Der Heizkörper 13 definiert hier einen Hohlkörper, der axial zumindest an einer Stirnseite offen ist. Gemäß Figur 9 ist der Heizkörper 13 so in das Gehäuse 5 bzw. den Vorheizraum 10 eingesetzt, dass er sowohl mit seiner radialen Außenseite als auch mit seiner radialen Innenseite mit dem Kraftstoff in Kontakt kommt. Ferner weist das Gehäuse 5 bei dieser zweiten Ausführungsform einen Auslasskanal 36 auf, der vom Auslassanschluss 7 ausgeht und axial in den Vorheizraum 10 hineinragt. Der Heizkörper 13 ist nun koaxial zu diesem Auslasskanal 36 im Gehäuse 5 angeordnet. In der Folge bildet sich der Kraftstoffpfad 11 so aus, dass er vom Einlassanschluss 6 durch einen Außenspalt 37, der radial zwischen dem Gehäuse 5 und der Außenseite des Heizkörpers 13 ausgebildet ist, durch eine axiale Lücke 38, die axial zwischen dem Gehäuse 5 und einer dem Auslassanschluss 7 zugewandten Stirnseite des Heizkörpers 13 ausgebildet ist, durch einen Innenspalt 39, der radial zwischen dem Auslasskanal 36 und der Innenseite des Heizkörpers 13 ausgebildet ist, um eine vom Auslassanschluss 7 abgewandte Stirnseite 40 des Auslasskanals 36 herum und durch den Auslasskanal 36 zum Auslassanschluss 7 führt.

Damit der als Hohlkörper konzipierte Heizkörper 13 trotz seiner Diagonalstrebe 35 koaxial auf den Auslasskanal 36 aufsetzbar ist, ist der Auslasskanal 36 geschlitzt, wozu er zwei sich diametral gegenüberliegende Axialschlitze 41 aufweist, in die die Diagonalstrebe 35 axial einführbar ist.

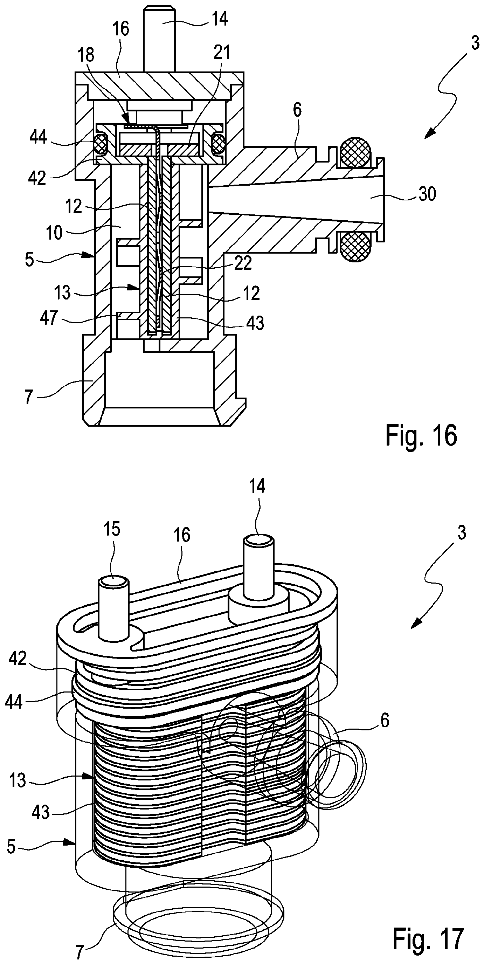

Die Figuren 10 bis 12 zeigen eine dritte Ausführungsform. Die Figuren 13 bis 16 zeigen eine vierte Ausführungsform und die Figuren 17 bis 20 zeigen eine fünfte Ausführungsform. Bei der dritten, vierten und fünften Ausführungsform besitzt der Heizkörper 13 einen Basisabschnitt 42 und einen vom Basisabschnitt 42 ausgehenden Tauchabschnitt 43. Der Tauchabschnitt 43 enthält das jeweilige Heizelement 12 und taucht so weit in den Vorheizraum 10 ein, dass er an seiner Außenseite mit dem Kraftstoff in Kontakt kommt. Der Basisabschnitt 42 verschließt innerhalb des Gehäuses 5 den Vorheizraum 10 dicht und weist die Elektroanschlüsse 14, 15 auf. Der Basisabschnitt 42 ist hierzu mit einer Dichtung 44 ausgestattet, die den Heizkörper 13 gegenüber dem Gehäuse 5 dichtet. Ferner ist im Basisabschnitt 42 eine Durchgangsöffnung 45 ausgebildet, durch die ein Aufnahmeraum 46 des Tauchabschnitts 43 zugänglich ist, der die Heizelemente 12 aufnimmt. Die Elektroanschlüsse 14, 15 sind auch hier durch den Deckel 16 hindurchgeführt, der am Gehäuse 5 festgelegt ist.

Auch hier steht der erste Elektroanschluss 14 über das Kontaktelement 18 mit ersten elektrischen Anschlüssen 19 der Heizelemente 12 direkt in Kontakt, während der zweite Elektroanschluss 15 direkt mit dem Heizkörper 13 elektrisch verbunden ist, der mit den zweiten elektrischen Anschlüssen 20 der beiden Heizelemente 12 direkt kontaktiert ist. Auch besitzt das Kontaktelement 18 hier Federabschnitte 22, um die Heizelemente 12 mit dem Heizkörper 13 zu verspannen. Ferner ist ein elektrischer Isolator 21 vorgesehen, der in den Basisabschnitt 42 eingesetzt ist, den ersten Elektroanschluss 14 trägt und diesen sowie das Kontaktelement 18 elektrisch gegenüber dem Heizkörper 13 isoliert.

Bei der dritten Ausführungsform ist der Tauchabschnitt 43 vergleichsweise einfach aufgebaut, wodurch diese Ausführungsform besonders preiswert realisierbar ist.

Um die Wärmeübertragung zwischen Heizkörper 13 und Kraftstoff zu verbessern, kann gemäß der vierten Ausführungsform der Tauchabschnitt 43 an seiner Außenseite mit einer Strömungsführung 47 ausgestattet sein, die so konfiguriert ist, dass sie den Strömungspfad 11 in der Umfangsrichtung um den Tauchabschnitt 43 herumführt. Bei der hier gezeigten, bevorzugten Ausführungsform steht die Strömungsführung 47 nach außen vom Tauchabschnitt 43 ab und windet sich um den Tauchabschnitt 43 schraubenförmig herum, und zwar beispielsweise über etwa 540°. Hierdurch kann die Länge des Kraftstoffpfads 11 im Vorheizraum 10 signifikant vergrößert werden.

Bei der fünften Ausführungsform wird die Wärmeübertragung zwischen Tauchabschnitt 43 und Kraftstoff dadurch verbessert, dass der Tauchabschnitt 43 an seiner Außenseite mehrere Rippen 48 aufweist, die sich quer zu einer zum Auslassanschluss 7 fluchtenden Axialrichtung 49 erstrecken und die außerdem in dieser Axialrichtung 49 zueinander beabstandet sind. Hierdurch entstehen zwischen den benachbarten Rippen 48 Zwischenräume 50, durch die der Kraftstoffpfad 11 hindurchführt. Die Rippen 48 können in der Umfangsrichtung geschlossen umlaufend konfiguriert sein, wodurch sie plattenförmig sind.

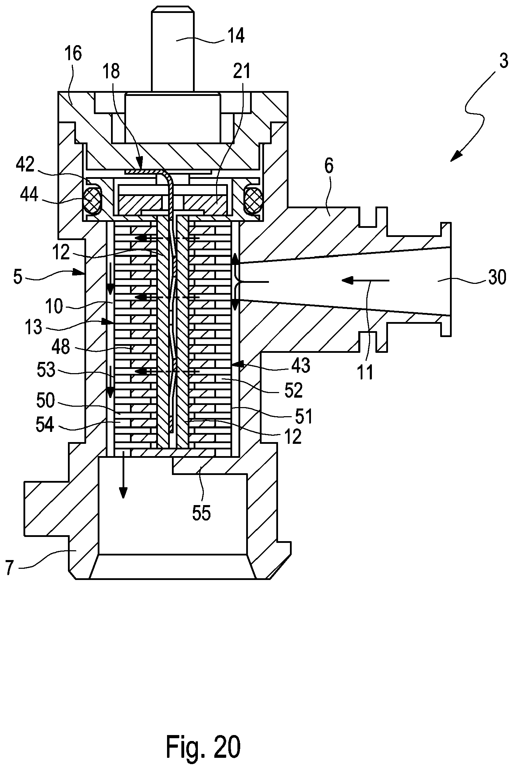

Der Tauchabschnitt 43 weist an einer dem Einlassanschluss 6 zugewandten Einlassseite 51 einen axial verlaufenden Verteilerkanal 52 auf, der sich hierdurch alle Rippen 48 hindurcherstreckt. An der von der Einlassseite 51 abgewandten Auslassseite 53 kann der Tauchabschnitt 43 diametral dem Verteilerkanal 52 gegenüberliegend einen ebenfalls axial verlaufenden Sammelkanal 54 aufweisen, der sich ebenfalls zweckmäßig durch sämtliche Rippen 48 hindurcherstreckt. Gemäß Figur 20 ist der Auslassanschluss 7 nur im Bereich der Auslassseite 53 zum Vorheizraum 10 hin offen, während er zur Einlassseite 51 hin beispielsweise mit Hilfe eines Wandabschnitts 55 gegenüber dem Vorheizraum 10 verschlossen ist. Der dem Kraftstoffpfad 11 folgende Kraftstoff kann sich entlang des Verteilerkanals 52 auf sämtliche Rippen 48 verteilen und somit über die gesamte axiale Höhe des Tauchabschnitts 43 die Zwischenräume 50 durchströmen. An der Austrittsseite 53 kann der Kraftstoff dann von sämtlichen Zwischenräumen 50 in den Sammelkanal 54 eintreten und von diesem zum Auslassanschluss 7 gelangen.

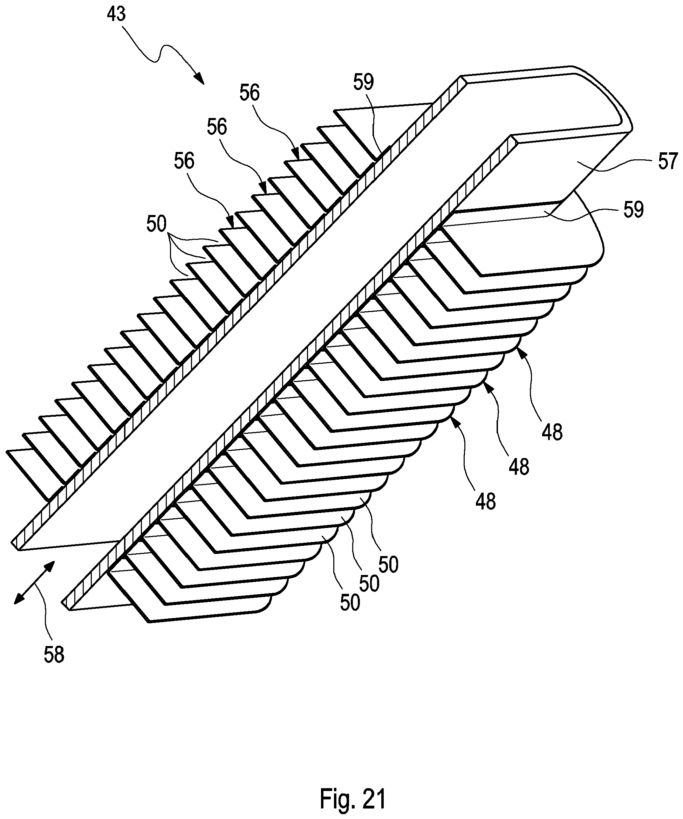

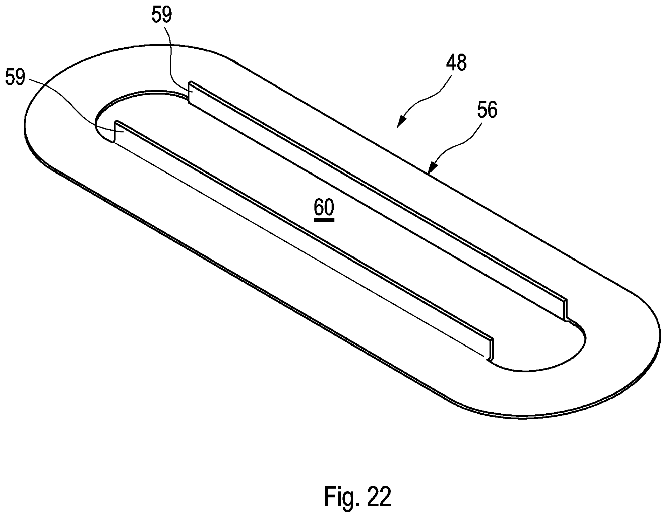

Gemäß den Fig. 21 und 22 können die Rippen 48 durch eine Vielzahl einzelner Platten 56 gebildet sein, die an einem Tragkörper 57 des Tauchabschnitts 43 einzeln befestigt sind, derart, dass sie in einer Stapelrichtung 58 zueinander beabstandet sind, um die Zwischenräume 50 zu bilden.

Zur Fixierung am Tragkörper 57 kann die jeweilige Platte 56 innen abgewinkelte Kragenabschnitte 59 aufweisen, die an einem Rand einer zentralen Durchgangsöffnung 60 der jeweiligen Platte 56 ausgebildet sind. Durch die jeweilige Öffnung wird der Tragkörper 57 hindurchgeführt, wobei die Kragenabschnitte 59 am Tragkörper 57 anliegen. Eine hinreichende Fixierung kann dabei mittels Klemmkräften realisiert werden. Insbesondere ist jedoch auch eine Lötverbindung denkbar.

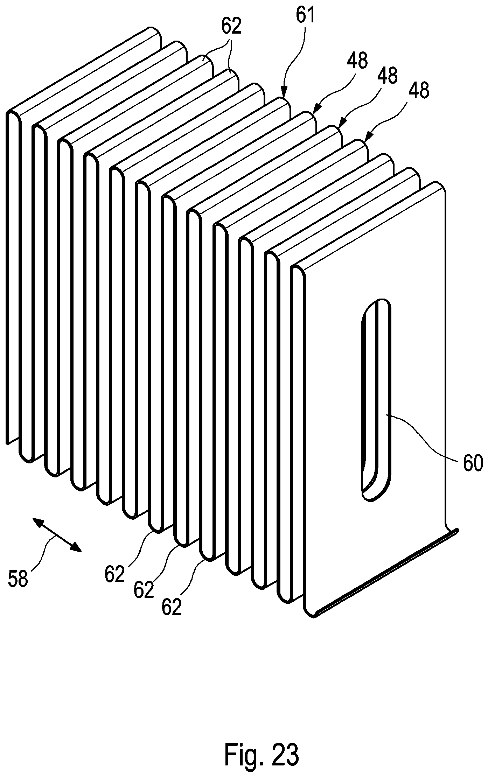

Fig. 23 zeigt eine andere Ausführungsform zur Realisierung der Rippen 48. Hierbei wird ein Bandmaterial 61 verwendet, das mehrfach wellenförmig umgebogen bzw. gefaltet ist, derart, dass mehrere Längsabschnitte des Bandmaterials 61 parallel zueinander und zueinander beabstandet angeordnet sind, um besagte Rippen 48 zu bilden. Auch hier sind die Rippen 48 in der Stapelrichtung 58 zueinander beabstandet. Ferner besitzen die einzelnen Rippen 48 auch hier eine zentrale Durchgangsöffnung 60, durch welche der Tragkörper 57 hindurchführbar ist. Benachbarte Rippen 48 sind jeweils durch einen Biegeabschnitt 62 miteinander verbunden, wodurch mehrere Rippen 48, vorzugsweise alle Rippen 48 mit einem einzigen durchgehenden Bandmaterial 61 realisiert werden können. Die Fixierung am Tragkörper 57 kann auch hier entweder mittels Klemmkräften oder mittels Lötverbindungen erfolgen.

## Patentansprüche

1. Vorheizeinrichtung zum Vorheizen von Kraftstoff einer Brennkraftmaschine,
- mit einem Einlassanschluss (6) zum Anschließen der Vorheizeinrichtung (3) an eine Verteilerleiste (2) einer Kraftstoffeinspritzanlage (1) der Brennkraftmaschine,
- mit einem Auslassanschluss (7) zum Anschließen eines Kraftstoffinjektors (4) der Kraftstoffeinspritzanlage (1) an die Vorheizeinrichtung (3),
- mit einem vom Kraftstoff durchströmbaren Vorheizraum (10), der mit dem Einlassanschluss (6) und mit dem Auslassanschluss (7) fluidisch verbunden ist,
- mit wenigstens einem elektrischen Heizelement (12) zum Beheizen des Kraftstoffs im Vorheizraum (10),
- mit zumindest einem metallischen Heizkörper (13), der im Vorheizraum (10) dem Kraftstoff ausgesetzt ist,
**dadurch gekennzeichnet,**
- **dass** das wenigstens eine Heizelement (12) in den zumindest einen Heizkörper (13) eingesetzt ist,
- **dass** der jeweilige Heizkörper (13) einen Basisabschnitt (42) und einen vom Basisabschnitt (42) ausgehenden Tauchabschnitt (43) aufweist,
- **dass** der Tauchabschnitt (43) das jeweilige Heizelement (12) enthält und so in den Vorheizraum (10) eintaucht, dass er an seiner Außenseite mit dem Kraftstoff in Kontakt kommt,
- **dass** der Basisabschnitt (42) innerhalb eines Gehäuses (5) der Vorheizeinrichtung (3) den Vorheizraum (10) dicht verschließt und Elektroanschlüsse (14, 15) zur Versorgung des wenigstens einen Heizelements (12) mit elektrischer Energie aufweist,
- **dass** der Tauchabschnitt (43) an seiner Außenseite
- entweder eine Strömungsführung (47) aufweist, die einen vom Einlassanschluss (6) zum Auslassanschluss (7) führenden Kraftstoffpfad (11) in der Umfangsrichtung zumindest teilweise um den Tauchabschnitt (43) herumführt,
- oder mehrere Rippen (48) aufweist, die sich quer zu einer zum Auslassanschluss (7) fluchtenden Axialrichtung (49) erstrecken und in der Axialrichtung (49) zueinander beabstandet sind, so dass ein vom Einlassanschluss (6) zum Auslassanschluss (7) führender Kraftstoffpfad (11) zwischen benachbarten Rippen (48) hindurchführt.

2. Vorheizeinrichtung nach Anspruch 1,
**dadurch gekennzeichnet,**
**dass** für den Fall, dass der Tauschabschnitt (43) an seiner Außenseite die Strömungsführung (47) aufweist, die Strömungsführung (47) nach außen vom Tauchabschnitt (43) absteht und sich schraubenförmig um den Tauchabschnitt (43) herumwindet.

3. Vorheizeinrichtung nach Anspruch 1,
**dadurch gekennzeichnet,**
**dass** für den Fall, dass der Tauschabschnitt (43) an seiner Außenseite die Rippen (48) aufweist, der Tauchabschnitt (43) an einer dem Einlassanschluss (6) zugewandten Einlassseite (51) einen axial verlaufenden Verteilerkanal (52) aufweist, der durch mehrere oder durch alle Rippen (48) hindurchführt.

4. Vorheizeinrichtung nach Anspruch 1 oder 3,
**dadurch gekennzeichnet,**
**dass** für den Fall, dass der Tauschabschnitt (43) an seiner Außenseite die Rippen (48) aufweist, der Auslassanschluss (7) an einer vom Einlassanschluss (6) abgewandten Auslassseite (53) des Tauchabschnitts (43) zum Vorheizraum (10) offen ist, während an er an einer dem Einlassanschluss (6) zugewandten Einlassseite (51) verschlossen ist.

5. Vorheizeinrichtung nach Anspruch 1 oder 3 oder 4,
**dadurch gekennzeichnet,**
**dass** für den Fall, dass der Tauschabschnitt (43) an seiner Außenseite die Rippen (48) aufweist, der Tauchabschnitt (43) an einer vom Einlassanschluss (6) abgewandten Auslassseite (53) einen axial verlaufenden Sammelkanal (54) aufweist, der durch mehrere oder durch alle Rippen (48) hindurchführt.

6. Vorheizeinrichtung nach einem der Ansprüche 1 bis 5,
**dadurch gekennzeichnet,**
- **dass** ein erster Elektroanschluss (14) und ein zweiter Elektroanschluss (15) vorgesehen sind, die an eine elektrische Energieversorgung anschließbar sind,
- **dass** der erste Elektroanschluss (14) mit einem Kontaktelement (18) elektrisch verbunden ist,
- **dass** das Kontaktelement (18) mit einem ersten elektrischen Anschluss (19) des jeweiligen Heizelements (12) elektrisch verbunden ist,
- **dass** der zweite Elektroanschluss (15) mit dem jeweiligen Heizkörper (13) elektrisch verbunden ist,
- **dass** der jeweilige Heizkörper (13) mit einem zweiten elektrischen Anschluss (20) des jeweiligen Heizelements (12) elektrisch verbunden ist.

7. Vorheizeinrichtung nach Anspruch 6,
**dadurch gekennzeichnet,**
**dass** das Kontaktelement (18) als Feder ausgestaltet ist oder zumindest einen federnden Abschnitt (22) aufweist, um das jeweilige Heizelement (12) gegen den Heizkörper (13) vorzuspannen.

8. Vorheizeinrichtung nach einem der Ansprüche 1 bis 7,
**dadurch gekennzeichnet,**
**dass** das jeweilige Heizelement (12) vom jeweiligen Heizkörper (13) vollständig und dicht umschlossen ist.

9. Vorheizeinrichtung nach einem der Ansprüche 1 bis 8,
**dadurch gekennzeichnet,**
**dass** der jeweilige Heizkörper (13) wenigstens eine Innenschale (32) und wenigstens eine Außenschale (31) aufweist, zwischen denen das jeweilige Heizelement (12) angeordnet ist.

10. Vorheizeinrichtung nach einem der Ansprüche 1 bis 9,
**dadurch gekennzeichnet,**
**dass** der Einlassanschluss (6) eine konvergierende Düse (30) aufweist.

11. Vorheizeinrichtung nach einem der Ansprüche 1 bis 10,
**dadurch gekennzeichnet,**
**dass** das jeweilige Heizelement (12) ein PTC-Element ist, das an zwei voneinander abgewandten Außenseiten jeweils einen elektrischen Anschluss (19, 20) aufweist.

12. Kraftstoffeinspritzanlage für eine Brennkraftmaschine, vorzugsweise eines Kraftfahrzeugs, umfassend
- zumindest eine Verteilerleiste (2) zum Bereitstellen von flüssigem Kraftstoff,
- mehrere Vorheizeinrichtungen (3) nach einem der vorhergehenden Ansprüche, die jeweils an die Verteilerleiste (2) angeschlossen sind, und
- mehrere Kraftstoffinjektoren (4), die jeweils an eine solche Vorheizeinrichtung (3) angeschlossen sind,
- wobei ein Kraftstoffpfad von der Verteilerleiste (2) durch den jeweiligen Vorheizraum (10) zum jeweiligen Kraftstoffinjektor (4) führt.

## Claims

1. A preheating device for the preheating of fuel of an internal combustion engine,
- with an inlet connection (6) for connecting the preheating device (3) to a distributor rail (2) of a fuel injection system (1) of the internal combustion engine,
- with an outlet connection (7) for connecting a fuel injector (4) of the fuel injection system (1) to the preheating device (3),
- with a preheating chamber (10), able to be flowed through by the fuel, which is fluidically connected with the inlet connection (6) and with the outlet connection (7),
- with at least one electrical heating element (12) for heating the fuel in the preheating chamber (10),
- with at least one metallic heating body (13), which is exposed to the fuel in the preheating chamber (10),
**characterized in that**
- the at least one heating element (12) is inserted into said at least one heating body (13),
- the respective heating body (13) has a base section (42) and a dipping section (43) originating from the base section (42),
- the dipping section (43) contains the respective heating element (12) and dips into the preheating chamber (10) so that it comes in contact with the fuel on its outer side,
- the base section (42) closes the preheating chamber (10) tightly inside a housing (5) of the preheating device (3), and has electro-connections (14, 15) for supplying the at least one heating element (12) with electrical energy,
- the dipping section (43) has on its outer side
- either a flow duct (47) which directs a fuel path (11), leading from the inlet connection (6) to the outlet connection (7), in the peripheral direction at least partially around the dipping section (43), or
- several ribs (48) which extend transversely to an axial direction (49) aligned to the outlet connection (7), and are spaced apart from one another in the axial direction (49), so that a fuel path (11) leading from the inlet connection (6) to the outlet connection (7) leads through between adjacent ribs (48).

2. The preheating device according to Claim 1,
**characterized in that**
in case the dipping section (43) has on is outer side said flow duct (47) the flow duct (47) projects outwards from the dipping section (43) and winds helically around the dipping section (43).

3. The preheating device according to Claim 1,
**characterized in that**
in case the dipping section (43) has on its outer side said rips (48) the dipping section (43) has on an inlet side (51), facing the inlet connection (6), an axially-running distributor duct (52), which leads through several or through all ribs (48).

4. The preheating device according to Claim 1 or 3,
**characterized in that**
in case the dipping section (43) has on its outer side said rips (48) the outlet connection (7) is open to the preheating chamber (10) on an outlet side (53) of the dipping section (43) facing away from the inlet connection (6), whereas it is closed on an inlet side (51) facing the inlet connection (6).

5. The preheating device according to Claim 1 or 3 or 4,
**characterized in that**
in case the dipping section (43) has on its outer side said rips (48) the dipping section (43) on an outlet side (53) facing away from the inlet connection (6) has an axially-running collecting duct (54), which leads through several or through all ribs (48).

6. The preheating device according to any one of Claims 1 to 5, **characterized in that**
- a first electro-connection (14) and a second electro-connection (15) are provided, which are able to be connected to an electrical energy supply,
- the first electro-connection (14) is electrically connected with a contact element (18),
- the contact element (18) is electrically connected with a first electrical connection (19) of the respective heating element (12),
- the second electro-connection (15) is electrically connected with the respective heating body (13),
- the respective heating body (13) is electrically connected with a second electrical connection (20) of the respective heating element (12).

7. The preheating device according to Claim 6,
**characterized in that**
the contact element (18) is configured as a spring or has at least one elastic section (22), in order to prestress the respective heating element (12) against the heating body (13).

8. The preheating device according to any one of Claims 1 to 7,
**characterized in that**
the respective heating element (12) is completely and tightly surrounded by the respective heating body (13).

9. The preheating device according to any one of Claims 1 to 8,
**characterized in that**
the respective heating body (13) has at least one inner shell (32) and at least one outer shell (31), between which the respective heating element (12) is arranged.

10. The preheating device according to any one of Claims 1 to 9,
**characterized in that**
the inlet connection (6) has a converging nozzle (30).

11. The preheating device according to any one of Claims 1 to 10,
**characterized in that**
the respective heating element (12) is a PTC element, which on two outer sides, facing away from one another, has respectively an electrical connection (19, 20).

12. A fuel injection system for an internal combustion engine, preferably of a vehicle, comprising
- at least one distribution rail (2) for providing of liquid fuel,
- several preheating devices (3) according to any one of the preceding claims, each preheating device (3) being connected to the distribution rail (2),
- several fuel injectors (4) each of which being connected to such a preheating device (3),
- wherein a fuel path is guided from the distribution rail (2) through the respective preheating chamber (10) to the respective fuel injector (4).

## Revendications

1. Dispositif de préchauffage destiné à préchauffer du carburant d'un moteur à combustion interne,
- avec un raccordement d'entrée (6) destiné à raccorder le dispositif de préchauffage (3) à une rampe de distribution (2) d'une installation d'injection de carburant (1) du moteur à combustion interne,
- avec un raccordement de sortie (7) destiné à raccorder un injecteur de carburant (4) de l'installation d'injection de carburant (1) au dispositif de préchauffage (3),
- avec un espace de préchauffage (10), qui est traversé par le carburant et qui est relié pour le fluide au raccordement d'entrée (6) et au raccordement de sortie (7),
- avec au moins un élément chauffant électrique (12) destiné à chauffer le carburant dans l'espace de préchauffage (10),
- avec au moins un corps chauffant métallique (13) qui est exposé au carburant dans l'espace de préchauffage (10),
**caractérisé**
- **en ce que** l'au moins un élément chauffant (12) est placé dans l'au moins un corps chauffant (13),
- **en ce que** le corps chauffant (13) respectif comporte un tronçon de base (42) et un tronçon plongeur (43) partant du tronçon de base (42),
- **en ce que** le tronçon plongeur (43) contient l'élément chauffant (12) respectif et plonge de telle manière dans l'espace de préchauffage (10) qu'il vient en contact avec le carburant par son côté extérieur,
- **en ce que** le tronçon de base (42) ferme de manière étanche l'espace de préchauffage (10) à l'intérieur d'un boîtier (5) du dispositif de chauffage (3) et comporte des raccordements électriques (14, 15) destinés à alimenter l'au moins un élément chauffant (12) en énergie électrique,
- **en ce que** le tronçon plongeur (43) comporte au niveau de son côté extérieur
• soit un guide d'écoulement (47) qui conduit un trajet de carburant (11), menant du raccordement d'entrée (6) au raccordement de sortie (7), dans la direction circonférentielle au moins en partie autour du tronçon plongeur (43),
• soit plusieurs nervures (48) qui s'étendent transversalement par rapport à une direction axiale (49) alignée par rapport au raccordement de sortie (7) et qui sont à distance les unes des autres dans la direction axiale (49) de telle sorte qu'un trajet de carburant (11) menant du raccordement d'entrée (6) au raccordement de sortie (7) passe entre des nervures (48) voisines.

2. Dispositif de préchauffage selon la revendication 1, **caractérisé en ce que**, dans le cas où le tronçon plongeur (43) comporte le guide d'écoulement (47) au niveau de son côté extérieur, le guide d'écoulement (47) dépasse du tronçon plongeur (43) vers l'extérieur et s'enroule en forme d'hélice autour du tronçon plongeur (43).

3. Dispositif de préchauffage selon la revendication 1, **caractérisé en ce que**, dans le cas où le tronçon plongeur (43) comporte les nervures (48) au niveau de son côté extérieur, le tronçon plongeur (43) comporte au niveau d'un côté d'entrée (51) proche du raccordement d'entrée (6) un canal de distribution (52) qui s'étend de façon axiale et qui passe à travers plusieurs nervures ou à travers toutes les nervures (48).

4. Dispositif de préchauffage selon la revendication 1 ou 3, **caractérisé en ce que**, dans le cas où le tronçon plongeur (43) comporte les nervures (48) au niveau de son côté extérieur, le raccordement de sortie (7) est ouvert vers l'espace de préchauffage (10) au niveau d'un côté de sortie (53), éloigné du raccordement d'entrée (6), du tronçon plongeur (43) tandis qu'il est fermé au niveau d'un côté d'entrée (51) proche du raccordement d'entrée (6).

5. Dispositif de préchauffage selon la revendication 1 ou 3 ou 4, **caractérisé en ce que**, dans le cas où le tronçon plongeur (43) comporte les nervures (48) au niveau de son côté extérieur, le tronçon plongeur (43) comporte au niveau d'un côté de sortie (53) éloigné du raccordement d'entrée (6) un canal collecteur (54) qui s'étend de façon axiale et qui passe à travers plusieurs nervures ou à travers toutes les nervures (48).

6. Dispositif de préchauffage selon l'une quelconque des revendications 1 à 5, **caractérisé**
- **en ce qu'**il est prévu un premier raccordement électrique (14) et un deuxième raccordement électrique (15) qui peuvent être raccordés à une alimentation en énergie électrique,
- **en ce que** le premier raccordement électrique (14) est relié électriquement à un élément de contact (18),
- **en ce que** l'élément de contact (18) est relié à un premier raccordement électrique (19) de l'élément chauffant (12) respectif,
- **en ce que** le deuxième raccordement électrique (15) est relié électriquement au corps chauffant (13) respectif,
- **en ce que** le corps chauffant (13) respectif est relié électriquement à un deuxième raccordement électrique (20) de l'élément chauffant (12) respectif.

7. Dispositif de préchauffage selon la revendication 6, **caractérisé en ce que** l'élément de contact (18) est réalisé comme un ressort ou comporte au moins un tronçon (22) faisant ressort afin de précontraindre l'élément chauffant (12) respectif contre le corps chauffant (13).

8. Dispositif de préchauffage selon l'une quelconque des revendications 1 à 7, **caractérisé en ce que** l'élément chauffant (12) respectif est complètement entouré de façon étanche par le corps chauffant (13) respectif.

9. Dispositif de préchauffage selon l'une quelconque des revendications 1 à 8, **caractérisé en ce que** le corps chauffant (13) respectif comporte au moins une coque intérieure (32) et au moins une coque extérieure (31) entre lesquelles est agencé l'élément chauffant (12) respectif.

10. Dispositif de préchauffage selon l'une quelconque des revendications 1 à 9, **caractérisé en ce que** le raccordement d'entrée (6) comporte une buse (30) convergente.

11. Dispositif de préchauffage selon l'une quelconque des revendications 1 à 10, **caractérisé en ce que** l'élément chauffant (12) respectif est un élément à coefficient de température positif PTC qui comporte au niveau de deux côtés extérieurs éloignés l'un de l'autre à chaque fois un raccordement électrique (19, 20).

12. Installation d'injection de carburant pour un moteur à combustion interne, de préférence d'un véhicule automobile, comprenant
- au moins une rampe de distribution (2) destinée à fournir du carburant liquide,
- plusieurs dispositifs de préchauffage (3) selon l'une quelconque des revendications précédentes qui sont raccordés à chaque fois à la rampe de distribution (2),
- plusieurs injecteurs de carburant (4) qui sont raccordés à chaque fois à un dispositif de chauffage (3) de ce type,
- dans laquelle un trajet de carburant mène de la rampe de distribution (2) à l'injecteur de carburant (4) respectif via l'espace de préchauffage (10) respectif.
